(19)

Europäisches
Patentamt
European
Patent Office
Office européen
des brevets

(11) **EP 3 330 919 A1**

(12) **EUROPEAN PATENT APPLICATION**

(43) Date of publication:
**06.06.2018 Bulletin 2018/23**

(51) Int Cl.:
***G06T 5/00*** (2006.01)

(21) Application number: **16306578.2**

(22) Date of filing: **30.11.2016**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

</td><td>

(72) Inventors:
• **REINHARD, Erik**
  **35576 Cesson-Sévigné (FR)**
• **TURKAN, Mehmet**
  **35576 Cesson-Sévigné (FR)**
• **THOREAU, Dominique**
  **35576 Cesson-Sévigné (FR)**

(74) Representative: **Huchet, Anne**
  **TECHNICOLOR**
  **1-5, rue Jeanne d'Arc**
  **92130 Issy-les-Moulineaux (FR)**

</td></tr>
</table>

(54) **METHOD FOR FILLING-IN MISSING REGIONS IN AN IMAGE OF A MULTIMEDIA CONTENT, CORRESPONDING COMPUTER PROGRAM PRODUCT AND APPARATUS**

(57)  A method is proposed for filling-in missing regions in an image of a multimedia content. Such method comprises, for a block x comprising a patch $x^a$ of known pixels and a patch $x^u$ of unknown pixels:

• obtaining (300) a set $\{y_i\}$ of N blocks of pixels ;

• splitting (310) the set $\{y_i\}$ for providing a set $\{y_i^a\}$, respectively $\{y_i^u\}$, of N patches referring to pixels in the set $\{y_i\}$ having the same relative spatial positions as $x^a$, respectively $x^u$, in x;

• determining (320) a fill-in patch $y_{fill}$ based on an optimization of an objective function subject to a boundary smoothness constraint taking into account at least one isophote vector estimated at position of at least one pixel p in $x^a$ for insuring a smooth transition between the patches $x^a$ and $x^u$;

• filling-in (330) missing regions in the image by associating the patch $y_{fill}$ to the patch $x^u$.

| |
|---|
| 300 — Obtaining a set of N blocks |
| 310 — Splitting the set of N blocks |
| 320 — Determining fill-in patch |
| 330 — Filling-in |

**Figure 3a**

EP 3 330 919 A1

**Description**

**1. FIELD OF THE DISCLOSURE**

The field of the disclosure is that of image and video processing.
More specifically, the disclosure relates to a method for filling-in missing regions (or holes) in images, which is usually referred to as the in-painting problem.

**2. TECHNOLOGICAL BACKGROUND**

This section is intended to introduce the reader to various aspects of art, which can be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.
Existing in-painting methods can be classified into two main categories.
The first category uses diffusion-based approaches that propagate level lines via diffusion (see for example *"Chan, T. F., & Shen, J. (2001). "Nontexture inpainting by curvature-driven diffusions." Journal of Visual Communication and Image Representation, 12(4), 436-449"*). Such methods are usually based on partial differential equations (PDEs) and variational methods. However, such diffusion-based methods tend to introduce blur when the region to be filled-in is large.
The second type of approach involves exemplar-based methods which sample and copy best match texture patches from the known image neighborhood (see for example *"A. Criminisi, P. Perez, and K. Toyama, "Region filling and object removal by exemplar based image inpainting," IEEE Trans. Image Process., vol. 13, no. 9, pp. 1200-1212, Sep. 2004"*). These methods have been inspired by texture synthesis techniques (see for example *"Efros, A., & Leung, T. K. (1999). "Texture synthesis by non-parametric sampling." In Computer Vision, 1999. The Proceedings of the Seventh IEEE International Conference on (Vol. 2, pp. 1033-1038). IEEE"*) and are known to work well for regular textures. In traditional exemplar-based in-painting techniques, the filled-in values of the input block are obtained by sampling the "best-match" patch from the source image similar to Markov Random Field (MRF) based texture synthesis (see for example *"Paget, R., & Longstaff, D. (1995). "Texture synthesis via a non-parametric Markov random Field." Proceedings of DICTA-95, Digital Image Computing: Techniques and Applications, 1, 547-552"*).
There is thus a need for an in-painting method that seamlessly integrates the filled region into the image without the need for additional post-processing.

**3. SUMMARY**

A particular aspect of the present disclosure relates to a method for filling-in missing regions in an image of a multimedia content. Such method comprises, for a block x of a current image of the multimedia content, the block x comprising a patch of known pixels $x^a$ and a patch of unknown pixels $x^u$ to be filled-in:

- obtaining a set $\{y_i\}$ of $N \geq 2$ blocks (130) $y_i$ of pixels, $i$ from 1 to $N$, for providing a dictionary of candidate pixels for filling-in the patch of unknown pixels $x^u$;
- splitting the set $\{y_i\}$ for providing:

  ○ a set $\{y_i^a\}$ of $N$ patches (130a) $y_i^a$ referring to pixels in the set $\{y_i\}$ having the same relative spatial positions as $x^a$ in x;

  ○ a set $\{y_i^u\}$ of N patches (130u) $y_i^u$ referring to pixels in the set $\{y_i\}$ having the same relative spatial positions as $x^u$ in x;

- determining a fill-in patch $y_{\text{fill}}$ for reconstructing the patch of unknown pixels $x^u$ based on an optimization of an objective function taking into account at least the patch of known pixels $x^a$ and the set $\{y_i^a\}$, the optimization being subject to a boundary smoothness constraint for insuring a smooth transition between the patch of known pixels $x^a$ and the patch of unknown pixels $x^u$ in the block $x$, the boundary smoothness constraint taking into account at least one isophote vector estimated at position of at least one pixel $p$ in the patch of known pixels $x^a$;
- filling-in missing regions in the image by associating the fill-in patch $y_{\text{fill}}$ to the patch of unknown pixels $x^u$.

Thus, the present disclosure proposes a new and inventive solution for filling-in missing regions (i.e. for in-painting) in a current image of a multimedia content that includes image or video materials while insuring a smooth transition on the boundary between the known and unknown regions of the image without any need of further post-processing step.

For this to be possible, the optimization of the objective function allowing determining the fill-in patch to be used for filling-in the patch of unknown pixels of a block x in the current image is performed subject to a boundary smoothness constraint taking into account isophote vectors estimated at position of pixels $p$ in the patch of known pixels of the block $x$.

Indeed, those isophote vectors (defined as orthogonal to the gradient vectors of the 2D luminance map of the known part of block $x$, and with the same magnitude) allow propagating the luminance and/or the chrominance profile that holds in the known region of the block x toward the unknown region of it.

Consequently, additional constraints on the luminance and/or chrominance of the pixels to be found for filling the patch of unknown pixels of block $x$ can be derived based on this added information in this unknown part. Therefore, a smooth transition on the boundary between the patches of known and unknown pixels of the block x can be achieved without any need for a further processing such as patch overlapping and averaging.

Another aspect of the present disclosure relates to an apparatus for filling-in missing regions in an image of a multimedia content. Such apparatus comprises a memory and a processor configured for, for a block x of a current image of the multimedia content, the block $x$ comprising a patch of known pixels $x^a$ and a patch of unknown pixels $x^u$ to be filled-in:

- obtaining a set $\{y_i\}$ of $N \geq 2$ blocks (130) $y_i$ of pixels, $i$ from 1 to $N$, for providing a dictionary of candidate pixels for filling-in the patch of unknown pixels $x^u$ ;
- splitting the set $\{y_i\}$ for providing:

  ○ a set $\{y_i^a\}$ of $N$ patches (130a) $y_i^a$ referring to pixels in the set $\{y_i\}$ having the same relative spatial positions as $x^a$ in x;

  ○ a set $\{y_i^u\}$ of $N$ patches (130u) $y_i^u$ referring to pixels in the set $\{y_i\}$ having the same relative spatial positions as $x^u$ in x;

- determining a fill-in patch $y_{\text{fill}}$ for reconstructing the patch of unknown pixels $x^u$ based on an optimization of an objective function taking into account at least the patch of known pixels $x^a$ and the set $\{y_i^a\}$, the optimization being subject to a boundary smoothness constraint for insuring a smooth transition between the patch of known pixels $x^a$ and the patch of unknown pixels $x^u$ in the block $x$, the boundary smoothness constraint taking into account at least one isophote vector (200) estimated at position of at least one pixel $p$ in the patch of known pixels $x^a$;
- filling-in missing regions in the image by associating the fill-in patch $y_{\text{fill}}$ to the patch of unknown pixels $x^u$.

Such an apparatus is particularly adapted for implementing the method for filling-in missing regions in an image of a multimedia content according to the present disclosure. Thus, the characteristics and advantages of this apparatus are the same as the disclosed method for filling-in missing regions in an image of a multimedia content.

According to one embodiment, the determining a fill-in patch $y_{\text{fill}}$ further comprises calculating a vector of weights $\bar{w}$, an element $w_i$ of index $i$ in $\bar{w}$ providing a measure of how close a patch $y_i^a$ of index $i$ in the set $\{y_i^a\}$ is to the patch of known pixels $x^a$, the fill-in patch $y_{\text{fill}}$ being equal to $\bar{\bar{Y}}^u \bar{w}$, with $\bar{\bar{Y}}^u$ a matrix containing column vectors $\bar{y}_i^u$, $i$ from 1 to $N$, with a column vector $\bar{y}_i^u$ containing the pixels in patch $y_i^u$ sorted in a given order.

Thus, the fill-in patch $y_{\text{fill}}$ is obtained as a linear combination of the $N$ patches $y_i^u$ weighted by factors representative of the similarity of the corresponding $N$ patches $y_i^a$ with the patch of known pixels $x^a$ for optimizing the use of the information present in all the candidate patches.

According to one embodiment, the objective function corresponds to $\left\| \bar{x}^a - \bar{\bar{Y}}^a \bar{w} \right\|_2^2$, and the vector of weights $\bar{w}$ fulfills $\underset{\bar{w}}{\operatorname{argmin}} \left\| \bar{x}^a - \bar{\bar{Y}}^a \bar{w} \right\|_2^2$, with:

- $\bar{x}^a$ a column vector containing the known pixels in the patch $x^a$ sorted in the given order,
- $\bar{\bar{Y}}^a$ a matrix containing column vectors $\bar{y}_i^a$, $i$ from 1 to N, with a column vector $\bar{y}_i^a$ containing the pixels in the patch $y_i^a$ sorted in the given order, and
- $\|\cdot\|_2$ the Euclidian norm.

Thus, the factors representative of the similarity of the corresponding N patches $y_i^a$ with the patch of known pixels $x^a$ are determined in a simple and robust way.

According to one embodiment, the determining a fill-in patch $y_{\text{fill}}$ further comprises obtaining at least one specific pixel $p'$ in the patch of unknown pixels $x^u$ based on the at least one pixel $p$ in the patch of known pixels $x^a$, and on the at least one isophote vector estimated at position of the at least one pixel $p$, the boundary smoothness constraint taking into account a similarity between a characteristic of the at least one pixel $p$ and the same characteristic for at least one candidate pixel in a patch $y_i^u$, $i$ from 1 to $N$, in the set $\{y_i^u\}$ for filing the at least one specific pixel $p'$.

Furthermore, the fill-in patch not only should be based on blocks $y_i$ of pixels corresponding to patches $y_i^a$ as similar as possible to the characteristics of the pixels in the known region of the block $x$, but should also provide fill-in pixels with characteristics as similar as possible to the characteristics of the specific pixel $p'$ in the interior of the patch of unknown pixels of the block $x$.

Thus, the characteristic profile (i.e. the luminance and/or the chrominance profile) of the known pixels of the block $x$ can be propagated, through the use of the isophote vectors, toward the patch of unknown pixels of block $x$. A smooth transition in the luminance and/or the chrominance profile can therefore be obtained on the boundary between the patches of known and unknown pixels of the block $x$.

According to different embodiments, the characteristic belongs to the group comprising:

- at least one color channel defined in a color space;
- a luminance;
- a chrominance; and
- any combination of at least two characteristics among said at least one color channel defined in a color space, said luminance, and said chrominance.

Thus, the profile of at least one color channel defined in a color space, or of the luminance, or of the chrominance, or of any combination of at least two of those characteristics, can be propagated through the boundary between the patches of known and unknown pixels of the block $x$ so that a smooth transition is obtained for such characteristics.

According to one embodiment, a position of the at least one specific pixel $p'$ in the patch of unknown pixels $x^u$ is equal to a position of the at least one pixel $p$ in the patch of known pixels $x^a$ plus the at least one isophote vector estimated at the position of the at least one pixel $p$.

Thus, the isophote vectors having the same magnitude as the gradient vector they are orthogonal to, sharp profiles of luminance and/or chrominance (i.e. leading to gradient vectors of high magnitude) can be propagated over a quiet important distance toward the patch of unknown pixels of the block $x$.

Consequently, edges present in the patch of known pixels of the block $x$ can be propagated in the unknown part of it.

According to another embodiment, a position of the at least one specific pixel $p'$ in the patch of unknown pixels $x^u$ is equal to a position of the at least one pixel $p$ in the patch of known pixels $x^a$ plus a normalized version of the at least one isophote vector estimated at the position of the at least one pixel $p$.

Thus, the profile of luminance and/or chrominance can be propagated toward an adjacent pixel through the use of a normalized version of the isophote vectors, e.g. of isophote vectors whose norm corresponds to a pixel width or height.

Consequently, the profile of luminance and/or chrominance as present on the border of the patch of known pixels of block $x$ can be propagated just next to the boundary between the patches of known and unknown pixels of it.

According to one embodiment, the similarity corresponds to a minimization of the norm $\|z-z'\|_1$, where:

- $z$ is a vector composed of the characteristic of the at least one pixel $p$ in the patch of known pixels $x^a$,
- $z'$ is a vector composed of the characteristic for at least one candidate pixel in a candidate patch $y_i^u$, $i$ from 1 to $N$, in the set $\{y_i^u\}$ for filing the at least one specific pixel $p'$ in the patch of unknown pixels $x^u$, and

- $\|.\|_1$ is the L1 norm.

Thus, the similarity between the candidate block $y_i$ considered for determining the fill-in patch and the expected characteristic of the specific pixel $p'$ (i.e. corresponding to the characteristic of the associated pixel $p$ propagated toward the specific pixel $p'$) in the unknown region of the block $x$ is estimated in a simple and robust way.

According to another embodiment, the similarity corresponds to a minimization of the norm $\left\| \frac{b}{\|b\|_2} \cdot (z - z') \right\|_1$, where:

- $z$ is a vector composed of the characteristic of the at least one pixel $p$ in the patch of known pixels $x^a$,
- $z'$ is a vector composed of the characteristic for at least one candidate pixel in a candidate patch $y_i^u$, $i$ from 1 to $N$, in the set $\{y_i^u\}$ for filing the at least one specific pixel p' in the patch of unknown pixels $x^u$,
- $b$ is a vector comprising a magnitude of the at least one isophote vector estimated at the position of the at least one pixel $p$,
- "." is the element-wise multiplication,
- $\|.\|_2$ is the Euclidian norm, and
- $\|\cdot\|_1$ is the L1 norm.

Thus, the similarity between the candidate block $y_i$ considered for determining the fill-in patch and the expected characteristic of the specific pixel $p'$ (i.e. corresponding to the characteristic of the associated pixel p propagated toward the specific pixel $p'$) in the unknown region of the block $x$ is estimated in a simple and robust way while taking into account the isophote magnitude.

According to one embodiment, the optimization is further subject to a minimization of an L1 norm or of an L0 norm of the vector of weights $\overline{w}$.

Thus, a sparsity constraint is used in order to minimize the number of candidate patches in the set of $N$ patches $y_i^u$ to be used for the reconstruction of the unknown pixels in the block $x$.

According to another embodiment, the optimization is further subject to having the fill-in patch $y_{\text{fill}}^u = \overline{\overline{Y}}^u \overline{w}$ to be above a lower threshold $t_0$ and below an upper threshold $t_1$.

Thus, the solution is constrained to lie between a range of output values, e.g. for an image coded on 8 bits, this range can be constrained to the range [0, 255].

According to one embodiment, the set $\{y_i\}$ of $N \geq 2$ blocks $y_i$ of pixels, $i$ from 1 to $N$, for providing a dictionary of candidate pixels for filling-in the patch of unknown pixels $x^u$ is extracted from a search window in a spatially close neighborhood of the block $x$.

Thus, the dictionary of candidate pixels can exhibit characteristics similar to the ones of pixels in the block $x$ to be in-painted due to spatial correlations that can be stronger over short distances in the image.

Another aspect of the present disclosure relates to a computer program product comprising program code instructions for implementing the above-mentioned method for filling-in missing regions in an image of a multimedia content (in any of its different embodiments), when the program is executed on a computer or a processor.

Another aspect of the present disclosure relates to a non-transitory computer-readable carrier medium storing a computer program product which, when executed by a computer or a processor causes the computer or the processor to carry out the above-mentioned method for filling-in missing regions in an image of a multimedia content (in any of its different embodiments).

## 4. LIST OF FIGURES

Other features and advantages of embodiments shall appear from the following description, given by way of indicative and non-exhaustive examples and from the appended drawings, of which:

- Figure 1 illustrates a current image of a multimedia content having a region to be filled-in and the associated concepts of interest involved in the method according to the disclosure;
- Figure 2 illustrates the concept of isophote vector involved in the method according to the disclosure;
- Figures 3a and 3b are flowcharts of particular embodiments of the disclosed method for filling-in missing regions in a current image of a multimedia content;
- Figure 4 is a schematic illustration of the structural blocks of an exemplary apparatus that can be used for implementing the method for filling-in missing regions in an image of a multimedia content according to the different embodiments disclosed in relation with figures 3a and 3b.

## 5. DETAILED DESCRIPTION

In all of the figures of the present document, the same numerical reference signs designate similar elements and steps.

The described embodiments can be of interest in any field where images with missing regions can be encountered and need to be restored. This can be the case for example in fields like image editing (e.g. object removal), image restoration (e.g. saturation correction, de-clipping, restoration of old images), object dis-occlusion for image based rendering methods, image compression, loss concealment after impaired transmission, etc.

In exemplar-based methods, the input block can alternatively be filled-in by a weighted linear combination of K closest patches (K nearest-neighbors, or K-NN) instead of using a single "best" patch. These nearest neighbors are all taken from the known image neighborhood and they are determined using the known pixel values of the input block. The contribution of each patch is weighted according to how similar the pixels of each of the K patches are to the known pixels of the input block. In one example, similarity is assessed using the Euclidean distance metric. The unknown pixels of the input block are then estimated as a linear weighted combination of the co-located pixels in the K patches using the same weighting coefficients.

An example is given by average template matching (ATM) (see for example *"T. K. Tan, C. S. Boon, and Y. Suzuki, "Intra prediction by averaged template matching predictors", in IEEE Conf. Consumer Comm. Network. Conf. (CCNC), 2007, pp. 405-409"*) where the K patches are uniformly averaged (each weight $w_k$ that weights the $k$-th patch is equal to $1/k$). In an alternative method larger weights are assigned to patches that are more similar to the known pixel values of the input block. This is known as a non-local means (NLM) (see for example *"A. Buades, B. Coll, J.M. Morel "A non local algorithm for image denoising", IEEE Computer Vision and Pattern Recognition 2005"*) based calculation of weights. In NLM, the k-th weight $w_k$ associated with the k-th nearest neighboring patch is calculated as $w_k = \exp(-d_k/h)$, where $d_k$ is the distance between the known pixel values of the input block and the co-located pixel values of the k-th nearest neighboring patches; and h represents a constant which is referred to as decay coefficient. ATM and NLM-based methods calculate weights $w_k$ in a heuristic manner that tends to lead to smooth and blurry in-painting results.

Related to these methods, optimization based algorithms have been proposed using locally-linear embedding (LLE) (see for example *"S. Roweis and L. Saul, "Nonlinear dimensionality reduction by locally linear embedding,"Science, vol. 290, pp. 2323-2326, Dec. 2000"*) or non-negative matrix factorization (NMF) (see for example *"D. D. Lee and H. S. Seung, "Algorithms for non-negative matrix factorization," in Advances in Neural Information Processing Systems. Cambridge, MA: MITPress, 2000"*). Instead of calculating the weighting coefficients heuristically, these methods perform an optimization on the known pixel values of the input block. The weighting coefficients are calculated using the known pixel values of the input block and the co-located values of the pixels of the selected K-NN patches. The unknown pixel values are reconstructed using the co-located values of K-NN patches (and the corresponding calculated weighting coefficients) under such a constrained optimization. Moreover, in NMF, the weighting coefficients are forced to be non-negative so as to construct representations of non-negative texture patches in an additive manner. Similarly, the LLE technique adds the constraint that the weighting coefficients should sum to one, which forces the reconstruction of each input block to lie in the subspace spanned by its nearest neighboring patches.

All these exemplar-based algorithms work under the assumption that if good matches of the known pixels are found elsewhere in the image, then copying the remaining values out of those blocks will lead to a good approximation of the missing pixels in the input block that is being in-painted. Each algorithm makes different trade-offs, according to what is considered a good approximation.

However, the fact is that all the above methods need a post-processing step to be performed for minimizing in-painting artifacts along the filled-in region's boundary. Such post-processing step can be, for example, borrowed from texture synthesis methods. Alternatively, neighboring blocks can be constrained to overlap and then averaged afterwards in the overlapping regions. In yet another approach, a minimum boundary cut can be determined to prevent blocking artifacts on the reconstruction.

However, such post-processing step remains penalizing for implementing the overall in-painting method. Furthermore, having different methods for both the determination of the patch to be used for the reconstruction and for the minimization of the in-painting artifacts can lead to suboptimal overall results.

The general principle of the disclosed method consists of introducing a boundary smoothness constraint into the optimization used for determining a fill-in patch for reconstructing patch of unknown pixels in a block *x* of an image of a multimedia content.

For that, a set of *N* blocks of pixels is obtained for providing a dictionary of candidate pixels. The fill-in patch is then determined from the dictionary of candidate pixels thanks to on an optimization of an objective function taking into account at least a boundary smoothness constraint for insuring a smooth transition between the patch of known pixels and the patch of unknown pixels in the block x. More particularly, the boundary smoothness constraint takes into account at least one isophote vector estimated at the position of at least one pixel in the patch of known pixels in the block x in order to propagate the luminance and/or the chrominance profile that holds in the known region of the block x toward the unknown region of it.

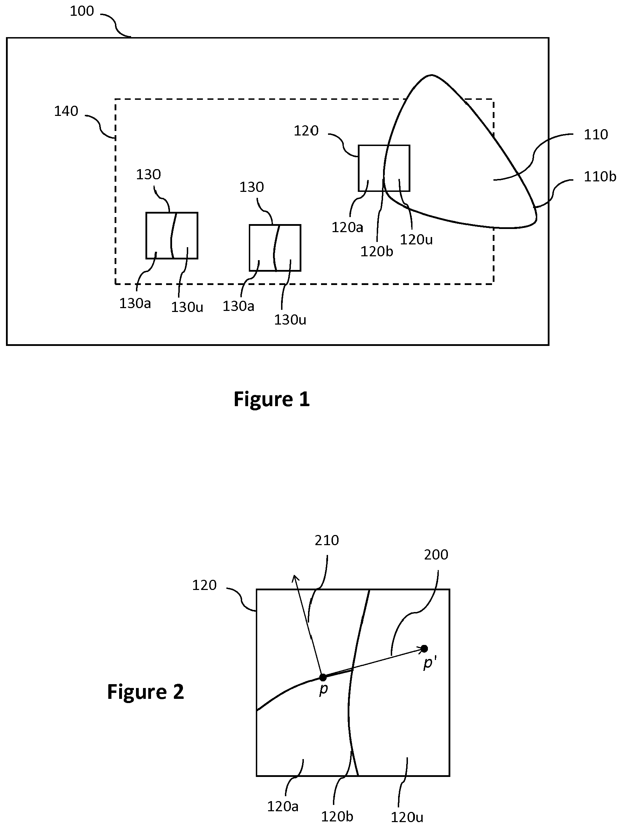

Referring now to **figure 1,** we illustrate a current image of a multimedia content having a region to be filled-in and the associated concepts of interest involved in the method according to the disclosure.

More particularly, the current image 100 of the multimedia content (including image or video material) presents a region with unknown pixels to be filled-in, i.e. a missing region 110.

In the disclosed method, the in-painting problem is formulated as an optimized approximation taking into account suitable boundary constraints. For that, the boundary 110b of the missing region 110 to be filled-in is determined and an ordering of which pixels to be filled next is to be established. There are two main approaches for establishing such ordering:

- A priority function can be defined by calculating a priority value on each pixel on the region's boundary (see for example "A. Criminisi, P. Perez, and K. Toyama, "Region filling and object removal by exemplar based image inpainting," IEEE Trans. Image Process., vol. 13, no. 9, pp. 1200-1212, Sep. 2004"); or
- The image can be hierarchically divided into non-overlapping blocks, starting with small blocks and iteratively progressing to larger blocks until all unknown regions are in-painted.

However, irrespective of how the image is divided into blocks, the disclosed method is applied to each of the blocks that contain both known and unknown pixels.

More particularly, one block x (120) of the current image 100 to which the disclosed method applies comprises a patch 120a of known pixels $x^a$ and a patch 120u of unknown pixels $x^u$ to be filled-in, those patches being demarcated by a border 120b.

In order to define a dictionary of candidate pixels for filling-in the patch 120u of unknown pixels $x^u$, a set $\{y_i\}$ of $N$ ($N \geq 2$) blocks $y_i$ (130) of pixels, $i$ from 1 to $N$, of same size than the block x (120), is extracted from a search window 140.

In one embodiment, the search window 140 is selected in a spatially close neighborhood of the block $x$ (120). The dictionary of candidate pixels thus can exhibit characteristics similar to the ones of the pixels in the block $x$ (120) to be in-painted through spatial correlations that can be stronger over short distances in the image. This can improve the in-painting result.

In another embodiment, the search window 140 is selected from a reference picture so that the dictionary of candidate pixels can exhibit predefined and controlled characteristics.

Based on the set $\{y_i\}$ of pixels that define the dictionary of candidate pixels, two sets are further defined:

- a set $\{y_i^a\}$ of $N$ patches $y_i^a$ (130a) referring to pixels in the set $\{y_i\}$ having the same relative spatial positions as $x^a$ in $x$;
- a set $\{y_i^u\}$ of $N$ patches $y_i^u$ (130u) referring to pixels in the set $\{y_i\}$ having the same relative spatial positions as $x^u$ in $x$.

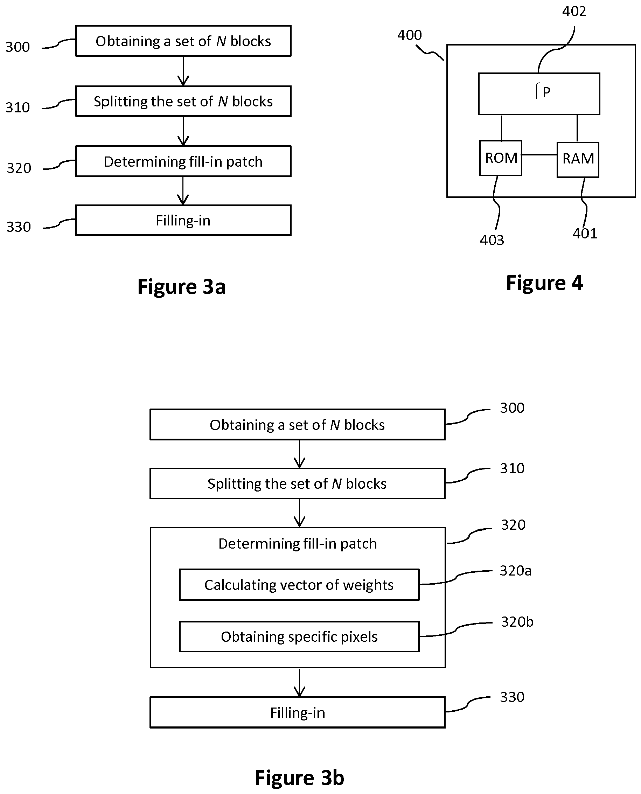

More particularly, the set $\{y_i^a\}$ is used for determining a similarity with the patch 120a of known pixels $x^a$, whereas the set $\{y_i^u\}$ is used for providing the corresponding patches to be used for determining a fill-in patch $y_{fill}$ that can successfully reconstruct the patch 120u of unknown pixels $x^u$ according to the disclosed method detailed below in relation with figures 3a and 3b.

Referring now to **figure 2,** we illustrate the concept of isophote vector involved in the method according to the disclosure.

For a pixel $p$ in the patch 120a of known pixels $x^a$, it is possible to compute an image gradient $\nabla I_p$ (210), i.e. a vector indicating the direction of (luminance) change at position of the pixel $p$. The magnitude $\|\nabla I_p\|$ of the image gradient $\nabla I_p$ (210) is an indication of its strength. Very sharp gradients can be associated with edges in the image.

An isophote vector $\nabla I_p^\perp$ (200) associated with the pixel $p$ is defined as a vector orthogonal to the image gradient $\nabla I_p$ (210). The isophote vector $\nabla I_p^\perp$ (200) therefore typically runs along edges in the image. Furthermore, the magnitude of the isophote vector $\nabla I_p^\perp$ (200) is defined as being the same as the magnitude of the image gradient $\nabla I_p$ (210) associated with the pixel $p$, i.e. $\|\nabla I_p^\perp\| = \|\nabla I_p\|$. Its magnitude is therefore representative of the sharpness of edges in the image.

For enforcing the disclosed method, among the two isophote vectors that are orthogonal to the image gradient

$\nabla I_p$ (210) at position of the pixel *p*, the isophote vector $\nabla I_p^\perp$ (200) pointing toward the patch 120u of unknown pixels $x^u$ can be selected. In case the two isophote vectors orthogonal to the image gradient $\nabla I_p$ (210) are pointing toward the patch 120u of unknown pixels $x^u$, one of the two can be selected as the isophote vector $\nabla I_p^\perp$ (200) to be used for enforcing the disclosed method, for example randomly.

Due to their definition, isophote vectors are important for in-painting applications, as they can inform algorithms about how edges should be continued into unknown regions. Consequently, they can be used for propagating the luminance and/or the chrominance profile that holds in the patch 120a of known pixels $x^a$ of the block *x* (120) toward the patch 120u of unknown pixels $x^u$ of it. More particularly, the luminance and/or the chrominance of pixel p can be propagated that way to the specific pixel *p'* in the patch 120u of unknown pixels $x^u$, by adding the isophote vector $\nabla I_p^\perp$ (200) to the position of pixel p, thus prolonging the shape of the edge toward the unknown region of the block *x* (120).

Referring now to **figures 3a and 3b,** we illustrate a method for filling-in missing regions in a current image of a multimedia content according to different embodiments of the present disclosure.

In block 300 (figures 3a and 3b), a set $\{y_i\}$ of N ($N \geq 2$) blocks $y_i$ (130) of pixels, *i* from 1 to N, is obtained for providing a dictionary of candidate pixels for filling-in the patch 120u of unknown pixels $x^u$ in block x (120).

For that, the size of the blocks $y_i$ (130) of pixels is the same as the size of the block *x* (120) to be in-painted and the number N of extracted blocks $y_i$ (130) is therefore dependent on the size of the search window so as to provide a consistent dictionary of candidate pixels.

In block 310 (figures 3a and 3b), the set $\{y_i\}$ is split for providing:

- a set $\{y_i^a\}$ of N patches $y_i^a$ (130a) referring to pixels in the set $\{y_i\}$ having the same relative spatial positions as $x^a$ in *x*;
- a set $\{y_i^u\}$ of N patches $y_i^u$ (130u) referring to pixels in the set $\{y_i\}$ having the same relative spatial positions as $x^u$ in *x*.

In block 320 (figures 3a and 3b), a fill-in patch $y_{\text{fill}}$ for reconstructing the patch 120u of unknown pixels $x^u$ is determined based on an optimization of an objective function taking into account at least the patch 120a of known pixels $x^a$ and the set $\{y_i^a\}$.

For that, in block 320a (figure 3b) a vector of weights $\overline{w}$, an element $w_i$ of index *i* in $\overline{w}$ providing a measure of how close a patch $y_i^a$ of index *i* in the set $\{y_i^a\}$ is to the patch 120a of known pixels $x^a$ in block 120 *x,* is calculated based on the optimization of an objective function.

In one embodiment, the objective function is expressed as:

$$\left\| \bar{x}^a - \overline{\overline{Y}}^a \overline{w} \right\|_2^2$$

with:

- $\bar{x}^a$ a column vector containing the known pixels in the patch 120a of known pixels $x^a$ sorted in the same order as the order of the pixels in patch $y_i^u$ (130u) in the column vector $\bar{y}_i^u$,
- $\overline{\overline{Y}}^a$ a matrix containing column vectors $\bar{y}_i^a$, *i* from 1 to N, with a column vector $\bar{y}_i^a$ containing the pixels in the patch $y_i^a$ (130a) sorted in the same previously cited given order, and
- $\|\cdot\|_2$ the Euclidian norm.

It means that a well-known objective function as encountered in methods like LLE or NMF can be used. Consequently, the elements $w_i$ representative of the similarity of the corresponding N patches $y_i^a$ (130a), *i* from 1 to N, with the patch 120a of known pixels $x^a$ are determined in a simple and robust way.

In this embodiment, the vector of weights w is calculated as resulting from the optimization of the previously detailed objective function, i.e. as fulfilling:

$$\underset{\overline{w}}{\operatorname{argmin}} \left\| \bar{x}^a - \bar{\bar{Y}}^a \overline{w} \right\|_2^2 \qquad \text{(Eq-1)}$$

In that case, the fill-in patch $y_{\text{fill}}$ corresponds to $\bar{\bar{Y}}^u \overline{w}$, with $\bar{\bar{Y}}^u$ a matrix containing column vectors $\bar{y}_i^u$, $i$ from 1 to $N$, with a column vector $\bar{y}_i^u$ containing the pixels in the patch $y_i^u$ (130u) sorted in the same previously cited given order.

Consequently, the fill-in patch $y_{\text{fill}}$ is obtained as a linear combination of the $N$ patches $y_i^u$ (130u) weighted by factors representative of the similarity of the corresponding $N$ patches $y_i^a$ (130a) with the patch 120a of known pixels $x^a$ for optimizing the use of the information present in all the candidate patches in the dictionary.

Back to block 320, the optimization of the objective function according to the disclosed technique is performed subject to a boundary smoothness constraint for insuring a smooth transition between the patch 120a of known pixels $x^a$ and the patch 120u of unknown pixels $x^u$ in the block $x$ (120).

More particularly, the boundary smoothness constraint can take into account at least one isophote vector $\nabla I_p^{\perp}$ (200) estimated at the position of at least one pixel $p$ in the patch 120a of known pixels $x^a$ so as to propagate the luminance and/or the chrominance profile that holds in the known region of the block $x$ (120) toward the unknown region of it.

For that, in block 320b (figure 3b), at least one specific pixel $p'$ in the patch 120u of unknown pixels $x^u$ is obtained based on at least one pixel $p$ in the patch 120a of known pixels $x^a$, and on at least one isophote vector $\nabla I_p^{\perp}$ (200) estimated at position of the at least one pixel $p$.

More particularly, in one embodiment, the position of the at least one specific pixel $p'$ in the patch 120u of unknown pixels $x^u$ is equal to a position of the at least one pixel $p$ in the patch 120a of known pixels $x^a$ plus the at least one isophote vector estimated at the position of the at least one pixel $p$, i.e.:

$$p' = p + \; \nabla I_p^{\perp}$$

In that case, the isophote vectors being defined as having the same magnitude as the gradient vector they are orthogonal to, sharp profiles of luminance and/or chrominance (i.e. leading to gradient vectors of high magnitude) can be propagated over a quite important distance toward the patch 120u of unknown pixels of the block x (120). In other words, the at least one specific pixel $p'$ can be located deep inside the patch 120u of unknown pixels. Consequently, edges present in the patch 120a of known pixels of the block x can be propagated deeply into the unknown part of it.

In another embodiment, the position of the at least one specific pixel $p'$ in the patch 120u of unknown pixels $x^u$ is equal to the position of the at least one pixel $p$ in the patch 120a of known pixels $x^a$ plus a normalized version of the at least one isophote vector (e.g. of at least one isophote vector whose norm corresponds to a pixel width or height in the current image 100) estimated at the position of the at least one pixel $p$, i.e.:

$$p' = p + \; \frac{\nabla I_p^{\perp}}{\left\| \nabla I_p^{\perp} \right\|}$$

In that case, the profile of luminance and/or chrominance as present on the border of the patch 120a of known pixels of block x (120) can be propagated just next to the boundary 120b between the patches 120a of known and 120u of unknown pixels of it.

In related embodiments of block 320, the optimization of the objective function (e.g. solving (Eq-1) in the embodiment discussed above in relation with block 320a) is subject to a boundary smoothness constraint that takes into account a similarity between a characteristic of the at least one pixel $p$ and the same characteristic for at least one candidate pixel in a patch $y_i^u$ (130u), $i$ from 1 to $N$, in the set $\{y_i^u\}$ for filing the at least one specific pixel $p'$.

In different embodiments, the characteristic belongs to the group comprising:

- at least one color channel defined in a color space;
- a luminance;
- a chrominance; and

• any combination of at least two characteristics among said at least one color channel defined in a color space, said luminance, and said chrominance.

For instance, the red, green and blue components of the pixel *p* can be denoted $R(p)$, $G(p)$ and $B(p)$ and the luminance components for this pixel can be calculated as a weighted combination of red, green and blue components, i.e.:

$$L(p) = r\, R(p) + g\, G(p) + b\, B(p)$$

In the BT709 color space the weights would be given by $(r,g,b) = (0.2126, 0.7152, 0.0722)$. Consequently, processing can take place on one or more color channels of any color space which separates luminance (or lightness or luma) from chromatic information. Examples of such color spaces are: CIE L*a*b*, CIE L*u*v*, YCbCr, Yuv, IPT. Alternatively, processing can take place on one or more color channels of color spaces that do not separate luminance from chrominance, including but not limited to RGB color spaces such as those defined in ITU-R Rec. BT.601, ITU-R Rec. BT.709 and ITU-R Rec. BT.2020. Further, the encoding of pixel values can be linear, but could also be encoded nonlinearly, for example through gamma encoding (for example ITU-R Rec. BT.709) or through the application of an opto-electrical transfer function (OETF) such as for example defined in ITU-R Rec. BT.2100.

Consequently, the profile of at least one color channel defined in a color space, or of the luminance, or of the chrominance, or of any combination of at least two of those characteristics, can be propagated through the boundary between the patches 120a of known and 120u of unknown pixels of the block x (120) so that a smooth transition is obtained for such characteristics.

For example, the similarity between a characteristic of the at least one pixel *p* and the same characteristic for at least one candidate pixel in a patch $y_i^u$ (130u), *i* from 1 to *N*, in the set $\{y_i^u\}$ for filing the at least one specific pixel *p'* can correspond to the minimization of the norm $\|z\text{-}z'\|_1$, where:

• *z* is a vector composed of the characteristic of the at least one pixel *p* in the patch 120a of known pixels $x^a$,
• *z'* is a vector of same size as *z* and composed of the same characteristic for at least one candidate pixel in a candidate patch $y_i^u$, *i* from 1 to *N*, in the set $\{y_i^u\}$ for filing the at least one specific pixel *p'* in the patch 120u of unknown pixels $x^u$, and
• $\|\cdot\|_1$ is the L1 norm.

In that case, the similarity between the at least one candidate pixel in the candidate block $y_i$ (130) considered for determining the fill-in patch $y_{fill}$ and the expected characteristic of the at least one specific pixel *p'* (i.e. corresponding to the characteristic of the associated at least one pixel *p* propagated toward the specific pixel *p'*) in the unknown region of the block x (120) is estimated in a simple and robust way.

In another example, the similarity between a characteristic of the at least one pixel *p* and the same characteristic for at least one candidate pixel in a patch $y_i^1$ (130u), *i* from 1 to *N*, in the set $\{y_i^u\}$ for filing the at least one specific pixel *p'* can correspond to the minimization of the norm $\left\| \frac{b}{\|b\|_2} \cdot (z - z') \right\|_1$, where:

• *z* and *z'* are the vectors discussed above,
• *b* is a vector comprising a magnitude of the at least one isophote vector estimated at the position of the at least one pixel *p*, thus of same size as *z* and *z'*,
• "." is the element-wise multiplication, and
• $\|.\|_2$ is the Euclidian norm.

In that case, the similarity between the at least one candidate pixel in the candidate block $y_i$ (130) considered for determining the fill-in patch $y_{fill}$ and the expected characteristic of the at least one specific pixel *p'* (i.e. corresponding to the characteristic of the associated at least one pixel *p* propagated toward the specific pixel *p'*) in the unknown region of the block *x* (120) is estimated in a simple and robust way while taking into account the isophote magnitude.

In another embodiment of block 320, the optimization of the objective function (e.g. solving (Eq-1) in the embodiment discussed above in relation with block 320a) is subject to a sparsity constraint in order to minimize the number of candidate patches in the set of *N* patches $y_i^u$ to be used for the reconstruction of the unknown pixels in the block x.

This can be achieved by optimizing the objective function subject to the minimization of an L0 norm of the vector

of weights $\overline{w}$, i.e. subject to:

$$\min \|\overline{w}\|_0$$

In that case, an approximate solution of (Eq-1) subject to this sparsity constraint can be obtained using greedy pursuit algorithms, including matching pursuit (MP) (see for example *"S. Mallat and Z. Zhang, "Matching pursuit with time-frequency dictionaries," IEEE Trans. Signal Process., vol. 41, no. 12, pp. 3397-3415, Dec. 1993")* or orthogonal matching pursuit (OMP) (see for example *"Y. C. Pati, R. Rezaiifar, and P. S. Krishnaprasad, "Orthogonal matching pursuit: Recursive function approximation with applications to waveletdecomposition," in Proc. Asilomar Conf. Signals Syst. Comput., 1993, pp. 40-44")*.

Alternatively, the sparsity constraint can be achieved by optimizing the objective function subject to the minimization of an L1 norm of the vector of weights w, i.e. subject to:

$$\min \|\overline{w}\|_1$$

In that case, an approximate solution to (Eq-1) subject to this sparsity constraint can be solved directly using linear programming routines.

In another embodiment of block 320, the optimization of the objective function (e.g. solving (Eq-1) in the embodiment discussed above in relation with block 320a) is further subject to a constraint for insuring that the solution lies between a range of output values. In that case, the optimization of the objective function can be further subject to having the fill-in patch $y^u_{\text{fill}} = \overline{\overline{Y}}^u \overline{w}$ to be above a lower threshold $t_0$ and below an upper threshold $t_1$, i.e.:

$$t_0 \leq \overline{Y}^u \overline{w} \leq t_1$$

For example, for an image coded into 8 bits, the solution can be constrained to the range [0, 255] so that $t_0$ is selected as equal to 0, and $t_1$ is selected as equal to 255.

All the embodiments disclosed above in relation with the constraints the optimization of the objective function can be subject to can be considered in combination. For example, a full optimization problem for determining the vector of weights $\overline{w}$ can be expressed as the optimization of:

$$\operatorname*{argmin}_{\overline{w}} \left\|\overline{x}^a - \overline{\overline{Y}}^a \overline{w}\right\|_2^2 \text{ subject to } \begin{cases} \min \|\overline{w}\|_1 \\ \min \left\|\dfrac{b}{\|b\|}(z - z')\right\|_1 \\ t_0 \leq \overline{\overline{Y}}^u \overline{w} \leq t_1 \end{cases}$$

As discussed above in relation with (Eq-1), the fill-in patch $y_{\text{fill}}$ for reconstructing the patch 120u of unknown pixels $x^u$ in block x (120) corresponds in that case to $\overline{\overline{Y}}^u \overline{w}$, with w the vector of weights calculated from the optimization of the above objective function, e.g. using convex optimization tools.

Alternative embodiments of the optimization and/or constraints can be considered. For example, if the selection of constraints does not admit a feasible solution to the optimization problem, one or more constraints can be removed. For example, the sparsity constraint can be removed to create a solution involving all elements of $\{y_i\}$. In essence, this would allow all weights $w_i$, $i$ from 1 to $N$, to be non-zero (if necessary).

In block 330 (figures 3a and 3b), the fill-in patch $y_{\text{fill}}$ determined in block 320 is associated to the patch 120u of unknown pixels $x^u$ in block $x$ (120) for filling-in the missing region 110 in the current image 100.

This allows having the missing region 110 to be in-painted with pixel characteristics that seamlessly fit with pixels surrounding these regions. This behavior results from the incorporation of characteristics obtained through the use of isophote vectors directly into the optimization procedure. This obviates the need for additional post-processing.

The method disclosed above in relation with blocks 300, 310, 320, 320a, 320b and 330 can be subsequently applied to another block of pixels of the current image 100 presenting unknown pixels, if any, so as to achieve the fill-in of the missing region 110.

Referring now to **figure 4,** we illustrate the structural blocks of an exemplary apparatus that can be used for implementing the method for filling-in missing regions in an image of a multimedia content according to any of the embodiments disclosed above in relation with figures 3a and 3b.

In an embodiment, an apparatus 400 for implementing the disclosed method comprises a non-volatile memory 403 (e.g. a read-only memory (ROM) or a hard disk), a volatile memory 401 (e.g. a random access memory or RAM) and a processor 402. The non-volatile memory 403 is a non-transitory computer-readable carrier medium. It stores executable program code instructions, which are executed by the processor 402 in order to enable implementation of the method described above (method for filling-in missing regions in an image of a multimedia content) in its various embodiment disclosed in relationship with figures 3a and 3b.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

All the steps of the above method for filling-in missing regions in an image of a multimedia content can be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it can also be implemented in hardware form or any form combining a hardware portion and a software portion.

**Claims**

1. Method for filling-in missing regions (110) in an image of a multimedia content, **characterized in that** it comprises, for a block (120) $x$ of a current image (100) of said multimedia content, said block x comprising a patch (120a) of known pixels $x^a$ and a patch (120u) of unknown pixels $x^u$ to be filled-in:

   • **obtaining** (300) a set $\{y_i\}$ of $N \geq 2$ blocks (130) $y_i$ of pixels, $i$ from 1 to $N$, for providing a dictionary of candidate pixels for filling-in said patch of unknown pixels $x^u$ ;
   • **splitting** (310) the set $\{y_i\}$ for providing:

   ◦ a set $\{y_i^a\}$ of $N$ patches (130a) $y_i^a$ referring to pixels in the set $\{y_i\}$ having the same relative spatial positions as $x^a$ in $x$;
   ◦ a set $\{y_i^u\}$ of $N$ patches (130u) $y_i^u$ referring to pixels in the set $\{y_i\}$ having the same relative spatial positions as $x^u$ in $x$;

   • **determining** (320) a fill-in patch $y_{\text{fill}}$ for reconstructing the patch of unknown pixels $x^u$ based on an optimization of an objective function taking into account at least said patch of known pixels $x^a$ and said set $\{y_i^a\}$, said optimization being subject to a boundary smoothness constraint for insuring a smooth transition between said patch of known pixels $x^a$ and said patch of unknown pixels $x^u$ in said block $x$, said boundary smoothness constraint taking into account at least one isophote vector (200) estimated at position of at least one pixel $p$ in said patch of known pixels $x^a$;
   • **filling-in** (330) missing regions in said image by associating said fill-in patch $y_{\text{fill}}$ to said patch of unknown pixels $x^u$.

2. Apparatus for filling-in missing regions in an image of a multimedia content comprising:

   - a memory; and
   - a processor (402) configured for, for a block x (120) of a current image (100) of said multimedia content, said block *x* comprising a patch (120a) of known pixels $x^a$ and a patch (120u) of unknown pixels $x^u$ to be filled-in:

- obtaining a set $\{y_i\}$ of $N \geq 2$ blocks (130) $y_i$ of pixels, *i* from 1 to *N,* for providing a dictionary of candidate pixels for filling-in said patch of unknown pixels $x^u$ ;
- splitting the set $\{y_i\}$ for providing:

  ○ a set $\{y_i^a\}$ of *N* patches (130a) $y_i^a$ referring to pixels in the set $\{y_i\}$ having the same relative spatial positions as $x^a$ in *x;*

  ○ a set $\{y_i^u\}$ of *N* patches (130u) $y_i^u$ referring to pixels in the set $\{y_i\}$ having the same relative spatial positions as $x^u$ in *x;*

- determining a fill-in patch $y_{\text{fill}}$ for reconstructing the patch of unknown pixels $x^u$ based on an optimization of an objective function taking into account at least said patch of known pixels $x^a$ and said set $\{y_i^a\}$, said optimization being subject to a boundary smoothness constraint for insuring a smooth transition between said patch of known pixels $x^a$ and said patch of unknown pixels $x^u$ in said block *x,* said boundary smoothness constraint taking into account at least one isophote vector (200) estimated at position of at least one pixel *p* in said patch of known pixels $x^a$;
- filling-in missing regions in said image by associating said fill-in patch $y_{\text{fill}}$ to said patch of unknown pixels $x^u$.

3. A method according to claim 1, or an apparatus according to claim 2, wherein said **determining** a fill-in patch $y_{\text{fill}}$ further comprises:

   - **calculating** (320a) a vector of weights $\overline{w}$, an element $w_i$ of index *i* in $\overline{w}$ providing a measure of how close a patch $y_i^a$ of index *i* in said set $\{y_i^a\}$ is to said patch of known pixels $x^a$,

   said fill-in patch $y_{\text{fill}}$ being equal to $\overline{\overline{Y}}^u \overline{w}$, with $\overline{\overline{Y}}^u$ a matrix containing column vectors $\overline{y}_i^u$, *i* from 1 to *N,* with a column vector $\overline{y}_i^u$ containing the pixels in patch $y_i^u$ sorted in a given order.

4. A method, or an apparatus, according to claim 3, wherein said objective function corresponds to $\left\| \bar{x}^a - \overline{\overline{Y}}^a \overline{w} \right\|_2^2$, and wherein said vector of weights w fulfills $\underset{\overline{w}}{\operatorname{argmin}} \left\| \bar{x}^a - \overline{\overline{Y}}^a \overline{w} \right\|_2^2$, with:

   - $\bar{x}^a$ a column vector containing the known pixels in the patch $x^a$ sorted in said given order,
   - $\overline{\overline{Y}}^a$ a matrix containing column vectors $\overline{y}_i^a$, *i* from 1 to *N,* with a column vector $\overline{y}_i^a$ containing the pixels in the patch $y_i^a$ sorted in said given order, and
   - $\|\cdot\|_2$ the Euclidian norm.

5. A method according to claim 1 or 3 or 4, or an apparatus according to claim 2 or 3 or 4, wherein said **determining** a fill-in patch $y_{\text{fill}}$ further comprises:

   - **obtaining** (320b) at least one specific pixel *p'* in said patch of unknown pixels $x^u$ based on said at least one pixel *p* in said patch of known pixels $x^a$, and on said at least one isophote vector estimated at position of the at least one pixel *p,*

   said boundary smoothness constraint taking into account a similarity between a characteristic of said at least one pixel *p* and the same characteristic for at least one candidate pixel in a patch $y_i^u$, *i* from 1 to *N,* in said set $\{y_i^u\}$ for filing said at least one specific pixel *p'*.

**6.** A method, or an apparatus, according to claim 5,
wherein said characteristic belongs to the group comprising:

• at least one color channel defined in a color space;
• a luminance;
• a chrominance; and
• any combination of at least two characteristics among said at least one color channel defined in a color space, said luminance, and said chrominance.

**7.** A method, or an apparatus, according to claim 5 or 6,
wherein a position of said at least one specific pixel $p'$ in said patch of unknown pixels $x^u$ is equal to a position of said at least one pixel $p$ in said patch of known pixels $x^a$ plus said at least one isophote vector estimated at said position of the at least one pixel $p$.

**8.** A method, or an apparatus, according to claim 5 or 6,
wherein a position of said at least one specific pixel $p'$ in said patch of unknown pixels $x^u$ is equal to a position of said at least one pixel $p$ in said patch of known pixels $x^a$ plus a normalized version of said at least one isophote vector estimated at said position of the at least one pixel $p$.

**9.** A method, or an apparatus, according to any of the claims 5 to 8,
wherein said similarity corresponds to a minimization of the norm $\|z\text{-}z'\|_1$, where:

• $z$ is a vector composed of said characteristic of said at least one pixel p in said patch of known pixels $x^a$,

• z' is a vector composed of said characteristic for at least one candidate pixel in a candidate patch $y_i^u$, $i$ from 1 to $N$, in said set $\{y_i^u\}$ for filing said at least one specific pixel $p'$ in said patch of unknown pixels $x^u$, and
• $\|.\|_1$ is the L1 norm.

**10.** A method, or an apparatus, according to any of the claims 5 to 8,

wherein said similarity corresponds to a minimization of the norm $\left\|\frac{b}{\|b\|_2} \cdot (z - z')\right\|_1$, where:

• $z$ is a vector composed of said characteristic of said at least one pixel $p$ in said patch of known pixels $x^a$,

• z' is a vector composed of said characteristic for at least one candidate pixel in a candidate patch $y_i^u$, $i$ from 1 to $N$, in said set $\{y_i^u\}$ for filing said at least one specific pixel $p'$ in said patch of unknown pixels $x^u$,
• $b$ is a vector comprising a magnitude of said at least one isophote vector estimated at said position of said at least one pixel $p$,
• "." is the element-wise multiplication,
• $\|\cdot\|_2$ is the Euclidian norm, and
• $\|\cdot\|_1$ is the L1 norm.

**11.** A method, or an apparatus, according to any of the claims 9 or 10,
wherein said optimization is further subject to a minimization of an L1 norm or of an L0 norm of said vector of weights $\overline{w}$.

**12.** A method, or an apparatus, according to any of the claims 9 to 11,

wherein said optimization is further subject to having said fill-in patch $y_{\text{fill}}^u = \overline{\overline{Y}}^u \overline{w}$ to be above a lower threshold $t_0$ and below an upper threshold $t_1$.

**13.** A method according to any of the claims 1 and 3 to 12, or an apparatus according to any of the claims 2 and 3 to 12, wherein said set $\{y_i\}$ of $N \geq 2$ blocks $y_i$ of pixels, $i$ from 1 to $N$, for providing a dictionary of candidate pixels for filling-in said patch of unknown pixels $x^u$ is extracted from a search window (140) in a spatially close neighborhood of said block x.

**14.** Computer program product **characterized in that** it comprises program code instructions for implementing the method according to at least one of the claims 1 and 3 to 13, when said program is executed on a computer or a processor.

15. A non-transitory computer-readable carrier medium storing a computer program product according to claim 14.

**Figure 1**

**Figure 2**

300 — Obtaining a set of *N* blocks

310 — Splitting the set of *N* blocks

320 — Determining fill-in patch

330 — Filling-in

**Figure 3a**

400

402

P

403    ROM    RAM    401

**Figure 4**

300 — Obtaining a set of *N* blocks

310 — Splitting the set of *N* blocks

320 — Determining fill-in patch

320a — Calculating vector of weights

320b — Obtaining specific pixels

330 — Filling-in

**Figure 3b**

Europäisches
Patentamt

European
Patent Office

Office européen
des brevets

## EUROPEAN SEARCH REPORT

Application Number

EP 16 30 6578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Josselin Gautier ET AL: "Livrable D2.2 of the PERSEE project : Analyse/Synthese de Texture", <br><br>, <br>November 2011 (2011-11), page 57, <br>XP055371610, <br>Retrieved from the Internet: <br>URL:http://hal.univ-nantes.fr/docs/00/77/31/72/PDF/D2-2.pdf <br>[retrieved on 2017-05-11] | 1-4, 13-15 | INV. <br>G06T5/00 |
| A | * page 21 * <br>* page 23 * <br>* page 26 - page 28 * | 5-12 | |
| X | OLIVIER LE MEUR ET AL: "Examplar-based inpainting based on local geometry", <br>IMAGE PROCESSING (ICIP), 2011 18TH IEEE INTERNATIONAL CONFERENCE ON, IEEE, <br>11 September 2011 (2011-09-11), pages 3401-3404, XP032080423, <br>DOI: 10.1109/ICIP.2011.6116441 <br>ISBN: 978-1-4577-1304-0 | 1-3, 13-15 | |
| A | * page 3402, left-hand column - page 3403, left-hand column * | 4-12 | TECHNICAL FIELDS SEARCHED (IPC) <br><br>G06T <br>H04N |
| A | GUILLEMOT CHRISTINE ET AL: "Object removal and loss concealment using neighbor embedding methods", <br>SIGNAL PROCESSING. IMAGE COMMUNICATION, <br>vol. 28, no. 10, November 2013 (2013-11), pages 1405-1419, XP028775892, <br>ISSN: 0923-5965, DOI: <br>10.1016/J.IMAGE.2013.08.020 <br>* page 1408 - page 1411 * | 1-15 | |

The present search report has been drawn up for all claims

| Place of search | Date of completion of the search | Examiner |
|---|---|---|
| Munich | 11 May 2017 | Maier, Werner |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHAN, T. F. ; SHEN, J.** Nontexture inpainting by curvature-driven diffusions. *Journal of Visual Communication and Image Representation,* 2001, vol. 12 ((4)), 436-449
- **A. CRIMINISI ; P. PEREZ ; K. TOYAMA.** Region filling and object removal by exemplar based image inpainting. *IEEE Trans. Image Process,* September 2004, vol. 13 (9), 1200-1212
- Texture synthesis by non-parametric sampling. **EFROS, A. ; LEUNG, T. K.** Computer Vision, 1999. The Proceedings of the Seventh IEEE International Conference. IEEE, 1999, vol. 2, 1033-1038
- **PAGET, R. ; LONGSTAFF, D.** Texture synthesis via a non-parametric Markov random Field. *Proceedings of DICTA-95, Digital Image Computing: Techniques and Applications,* 1995, vol. 1, 547-552
- **T. K. TAN ; C. S. BOON ; Y. SUZUKI,.** Intra prediction by averaged template matching predictors. *IEEE Conf. Consumer Comm. Network. Conf. (CCNC),* 2007, 405-409
- **A. BUADES ; B. COLL ; J.M. MOREL.** A non local algorithm for image denoising. *IEEE Computer Vision and Pattern Recognition,* 2005
- **S. ROWEIS ; L. SAUL,.** Nonlinear dimensionality reduction by locally linear embedding. *Science,* December 2000, vol. 290, 2323-2326
- Algorithms for non-negative matrix factorization. **D. D. LEE ; H. S. SEUNG.** Advances in Neural Information Processing Systems. Cambridge, MA. MIT-Press, 2000
- **A. CRIMINISI ; P. PEREZ ; K. TOYAMA.** Region filling and object removal by exemplar based image inpainting. *IEEE Trans. Image Process.,* September 2004, vol. 13 (9), 1200-1212
- **S. MALLAT ; Z. ZHANG.** Matching pursuit with time-frequency dictionaries. *IEEE Trans. Signal Process.,* December 1993, vol. 41 (12), 3397-3415
- **Y. C. PATI ; R. REZAIIFAR ; P. S. KRISHNAPRAS-AD.** Orthogonal matching pursuit: Recursive function approximation with applications to waveletdecomposition. *Proc. Asilomar Conf. Signals Syst. Comput.,* 1993, 40-44